# EUROPEAN PATENT APPLICATION

(11) **EP 4 606 454 A1**
(43) Date of publication of application: **27.08.2025**
(21) Application number: 25158721.8
(22) Date of filing: 19.02.2025
(51) Int. Cl.: B01D 46/00, B01D 46/24, B01D 46/58

(54) **AN ADAPTER ELEMENT, A FILTER CARTRIDGE, AN AIR FILTER DEVICE, A METHOD FOR REPLACING A FILTER CARTRIDGE OF AN AIR FILTER DEVICE BY ANOTHER FILTER CARTRIDGE**

(30) Priority: 23.02.2024 DE 102024105104
(71) Applicant: MANN+HUMMEL LIFE SCIENCES & ENVIRONMENT HOLDING SINGAPORE PTE. LTD., Singapore 139234 (SG)
(72) Inventor: DEHNEN, Ulrich, 71636 Ludwigsburg (DE); MÜNKEL, Karlheinz, 71636 Ludwigsburg (DE)
(74) Representative: Mann + Hummel Intellectual Property

(57) **Abstract**

In order to further develop an air filter device (100), comprising a base plate (10) with a plurality of spaced-apart flow openings (12a, 12b, 12c, 12d) and a plurality of filter cartridges (20a, 20b, 20c, 20d; 20a', 20b', 20c', 20d') each having a filter medium body (50) comprising at least one gas filter medium,
- wherein the base plate (10) comprises adjacent to the flow openings (12a, 12b, 12c, 12d) in each case at least one mounting device (14, 16; 16'; 16") for mounting one filter cartridge (20a, 20b, 20c, 20d; 20a', 20b', 20c', 20d') each on the base plate (10),
- wherein the filter cartridges (20a, 20b, 20c, 20d; 20a', 20b', 20c', 20d') each have at least one counter mounting means (22, 24; 24') corresponding to the mounting device (14, 16; 16'; 16"), which counter mounting means (22) can be brought into operative connection with the respective mounting device (14, 16; 16'; 16") of the base plate (10), in such way, that that assembly of the filter cartridge (20a, 20b, 20c, 20d; 20a', 20b', 20c', 20d') to the base plate (10) is simplified and efficiency of assembly is increased, it is proposed that the mounting device (14) is designed as a screw thread connection means (14) and the corresponding counter mounting means (22) is designed as a counter screw thread connection means (22), wherein
- the screw thread connection means (14) and the counter screw thread connection means (22) form together a screw thread connection (14, 22), and
- wherein the screw thread connection (14, 22) can be tightened or loosened by applying rotational movement to the screw thread connection means (14).

## Description

### Technical field

The present invention relates to an adapter element, to a filter cartridge for an air filter device, to an air filter device according to the preamble of claim 1 as well as to a method for exchanging a filter cartridge of an air filter device.

### Background and prior art

Exemplary filter cartridges matching the above description are disclosed for example in prior art document "CAMCARB CG MOLECULAR FILTER" of camfil, cf https://www.camfil.com/product/documents/dam/25501/Brochures-CamCarb-CG.pdf.

These filter cartridges comprising adsorber material can be used for particle filtration, such as air particle filtration, or as gas phase air filter installed in supply, recirculation, and exhaust air systems in commercial, industrial, and process applications, such as airports. Areas of applications are for example adsorption of odours, toxic gaseous pollutants, hydrocarbons and solvents.

A plurality, for example 4, 8, 12, 16 or hundreds, of filter cartridges are mounted onto a dedicated base plate or mounting frame designed to fit easily into a standard filter housing. For mounting the filter cartridges on the base plate, integrated bayonet fastenings are used, in particular the filter cartridges are fitted in bayonet-type socket. Between the bayonet socket and the mounting frame, an axial sealing is compressed during fastening the bayonet.

In detail, each filter cartridge comprises a standard interface bayonet connection with three mushroom-like connecting elements. On the side of the base plate, corresponding counter elements, the bayonet slots, are arranged.

The filter cartridges need to be replaced or exchanged at regular intervals. Assembling the individual cartridges requires manually joining the three bayonet pins into the bayonet holes and then applying torque to rotate them by a defined rotation angle, for example 15 degrees, into the final position. As the interaction of the bayonet pins and holes is arranged at the side of the filter cartridge facing away from the user during the assembling process, this assembling procedure is time-consuming and error prone. It may happen, that not all bayonet pins are in correct position, which leads to leakage and malfunction of the air filter device. This is especially problematic, because the user gets no clear feedback whether the bayonet pins are correctly inserted into the holes or whether the final position is reached during rotation process. Even if the bayonet is correctly installed, the air filter device may become leaky over time, because due to gravity and the weight of the filter cartridge, the axial sealing is compressed at the bottom side of the filter cartridge creating a narrow gap on the top side.

### Disclosure of the present invention: problem, solution, advantages

Starting from the disadvantages and shortcomings as described above and taking the prior art as discussed into account, an object of the present invention is to further develop an adapter element of the kind as described in the technical field, a filter cartridge of the kind as described in the technical field, an air filter device as described in the technical field and a method of the kind as described in the technical field, in such way that assembly of the filter cartridge to the base plate is simplified and efficiency of assembly is increased. In particular, for replacing or exchanging the filter cartridge, i. e. for dissembling a used-up filter cartridge from the base plate and assembling a fresh filter cartridge to the base plate, there shall be no need for precise insertion of counter mounting means into mounting means as with the bayonet lock.

The object of the present invention is achieved by an air filter device comprising the features of claim 1, by a filter cartridge comprising the features of claim 11, by an adapter element comprising the features of claim 13 as well as by a method comprising the features of claim 14. Advantageous embodiments and expedient improvements of the present invention are disclosed in the respective dependent claims.

The present invention is principally based on the idea to provide a new approach to connecting the filter cartridge to the base plate. Instead of directly coupling the filter cartridge to the base plate, the invention utilizes an adapter element with a screw thread connection means to mount the filter cartridge. The adapter element, in turn, is connected to the base plate through further counter mounting means, in particular through bayonet-coupling means and/or form-fit coupling means, for example through snap-coupling.

The use of a screw thread connection for mounting the filter cartridge results in a secure and reliable connection, minimizing the risk of accidental disconnection or detachment during operation. This is particularly advantageous in applications where external factors such as vibrations or fluctuations in pressure may affect the stability of the connection.

Precision control is another notable advantage offered by the screw thread connection as compared to a bayonet connection. The tightness of the connection can be easily adjusted by turning the threads, allowing for precise alignment and optimal performance. In contrast, a bayonet connection often lacks the same level of control, relying on a limited number of fixed positions.

Moreover, the threaded engagement in a screw thread connection provides enhanced resistance to accidental release. Disengaging the components requires a deliberate and controlled action, reducing the likelihood of inadvertent disconnects during operation or handling. Thus, ease of assembly is achieved with screw thread connections. Aligning the threaded components and gradually rotating them ensures a secure fit. This straightforward and simple procedure, especially when using components with well-designed threading patterns, contributes to the overall ease of assembly.

In a nutshell, the use of an adapter element with screw thread connection to the filter cartridge offers secure mounting, precise control, resistance to accidental release, and ease of assembly, making it particularly suitable for particle filtration in commercial, industrial, and process applications.

In addition, the adapter element enhances ease of assembly of the filter cartridges to the base plate. By connecting the filter cartridge to the base plate through the adapter element, which features two interfaces, namely the screw thread connection to the filter cartridge and a further connection such as bayonet-connection or form-fit coupling to the base plate, the installation and replacement processes are simplified. This streamlined procedure reduces downtime and overall operational costs.

Furthermore, the combination of the screw thread connection with the secondary connection interface, whether a bayonet-connection or snap connection or form-fit coupling, provides versatility. This enables the system to adapt to different filtration requirements and accommodate various types of filter cartridges.

The screw thread connection may comprise at least one, preferably at least two diagonally arranged, screw thread connection means and at least one counter screw thread connection means. The screw thread connection means are arranged to the adapter element of the base plate providing an interface to the filter cartridge. The counter screw thread connection means are arranged to the filter cartridge providing an interface to the base plate. An inverted design is also possible.

According to a preferred embodiment of the present invention, the screw thread connection means is a continuous or interrupted helical groove grooved, for example carved, into a cylindrical or conical screw thread collar on the adapter element. This groove allows for easy and secure engagement between the adapter element and the corresponding filter cartridge. The screw thread connection means may alternatively be a continuous or interrupted helical ridge extending from the cylindrical or conical screw thread collar on the adapter element, which cooperates with the counter screw thread connection means. On the other hand, the counter screw thread connection means is a continuous or interrupted helical ridge that wraps around the surface of a cylindrical collar found on the filter cartridges. This ridge ensures a snug fit and reliable connection with the adapter element's screw thread collar. An inverted design is also possible.

The cylindrical or conical shape of the collar of the adapter element, which includes the at least one screw thread connection means, enables the assembly of the filter cartridge to the base plate without regard to the rotation angle of the filter cartridge. In other words, this embodiment allows for a position-independent connection between the filter cartridge and the base plate.

The cylindrical collar comprising the counter screw thread connection means may advantageously have a smaller diameter as the filter medium body comprising the gas filter medium. This leads to the benefit, that the screw thread connection means of the adapter element can be arranged on a circular screw thread collar having the same outer diameter or at most the same outer diameter as the open end cap. Thus, the filter cartridges can be placed on the base plate next to each other in a small space.

The design of the adapter element's screw thread collar is specifically intended to receive and engage seamlessly with the corresponding cylindrical collar of the filter cartridges, providing a sturdy and effective connection between the two components.

In this context, the term interrupted groove and interrupted thread are used to refer to a type of threaded connection where the continuity of the groove and/or of the thread is intentionally broken. Interruptions in thread, in particular in the helical groove and/or in the helical ridge, provide flexibility and allow for slight adjustments in the alignment of the screw thread connection. This flexibility is particularly useful when dealing with slight misalignments or variations in the dimensions of the mating parts.

Moreover, interruptions in the thread can make it easier to disengage and separate the connected parts when needed. The interruptions provide natural starting points for unscrewing and allow for more efficient disassembly.

To provide a particular reliable screw thread connection, preferably several screw thread connection means are symmetrically distributed over the circumference of the screw thread connection collar. For providing a compact arrangement, the screw thread connection means are preferably diagonally arranged.

According to a preferred embodiment of the present invention, the air filter device comprises multiple filter cartridges, each comprising an open end cap at one axial end. The open end cap is equipped with at least one inlet-opening, which is connected to one of the flow openings in order to facilitate the entry of gas into the respective filter cartridge assigned to that open end cap. Moreover, the cylindrical collar of the filter cartridges surrounds the outer cylindrical surface of the filter cartridges and forms part of the open end cap.

Therefore, the described air filter device incorporates filter cartridges with open end caps having inlet-openings for gas entry, where the cylindrical collar surrounding the filter cartridges forms part of the end cap. The inclusion of counter screw thread connection means at the open end cap allows for secure and efficient engagement between the filter cartridge and the adapter element.

According to a preferred embodiment, beneath the open end cap, each filter cartridge further comprises a closed end cap. The open end cap and the closed end cap border the filter medium body terminally. The closed end cap is advantageously designed with at least one handle or grip element to facilitate applying tensile or compressive force on the filter cartridge. This force assists in the rotational movement of the screw thread connection means and enables the formation or loosening of the screw thread connection.

The counter mounting means, in this case counter screw thread connection means, of the filter cartridge can be brought into operative connection with the screw thread connection means of the adapter element by means of a rotational movement. In this context, rotational movement is defined as a movement around the longitudinal axis of the filter cartridge. With other words, for element assembly and disassembly a turning movement or rotational mounting is required.

In this context, axial refers to a direction along the longitudinal axis of the filter cartridge and radial refers to a direction vertical to the longitudinal axis of the filter cartridge.

As described above, the adapter element, is connected to the base plate through further counter mounting means, in particular through bayonet-coupling means and/or form-fit coupling means, for example through snap-coupling. According to an advantageous embodiment of the present invention, the outer diameter of a radial peripheral edge of the adapter element facing to the base plate and comprising the further counter mounting means is circular. This leads to the advantage, that the adapter element can be mounted at any angle of radial rotation to the base plate.

The screw thread connection means might be made for example of plastic or of sheet metal.

Where a counter bayonet fastening means is present, in order to prevent the bayonet connection from being operated in the loosening direction, the adapter element may comprise at least one locking means being designed to cooperate with the bayonet connection, in particular to engage with the bayonet slot, in such way that in the locked position of the bayonet connection, the locking means prevents accidental loosening of the adapter element when the filter cartridge is installed or replaced. With other words, the locking means may provide a loosening lock to prevent unintentional loosening of the bayonet connection.

In more detail, according to a preferred embodiment of the present invention,
- the adapter element of the base plate comprises at least one further counter mounting means being designed as a counter bayonet fastening means for fastening the filter cartridge or the adapter element with the base plate by means of a bayonet connection and
- the adapter element comprises, adjacent to the counter bayonet fastening means, at least one locking means being designed for cooperating with a bayonet fastening means of the base plate, in particular to engage with a bayonet slot, to prevent the bayonet connection to be accidentally loosened or turned back.

The locking means is preferably deformable in axial direction. For example, the locking means can be a nose formed like a triangular wedge with at least one bevel, wherein said nose deforms during assembly of the bayonet connection and deflects into the bayonet slot or engages in the recess of bayonet when the bayonet is in its closed position. In this embodiment the locking means is designed as a safety catch to prevent accidental loosening of the adapter element from the base plate when the filter cartridge is removed.

According to an advantageous embodiment of the present invention, the open end cap comprises a lower wall thickness around the locking means or adjacent to the locking means. Due to this reduced wall thickness, the wall around the locking means is deformable and allows the locking means to move a little bit in the direction of the longitudinal axis of the filter element, when the locking means is pressed against the base plate during assembly of the bayonet connection.

The adapter element according to the present invention allows indirect connection of the filter cartridge to the base plate. In more detail, the adapter element allows a connection of the filter cartridge according to the present invention or of one the filter cartridges of the air filter device of the present invention to the base plate of the air filter device according to the present invention.

For allowing the connection to the base plate, the adapter element comprises at least one further counter mounting means for example a counter bayonet fastening means, such as an engagement recess, for example a longitudinal slit at the end of which a short transverse slit is attached at a right angle. In a counter version, the counter bayonet fastening means comprises at least one locking protrusion, e. g. at least one pin, which can be inserted into the engagement recess of a bayonet fastening element and then arranged in a closed position by means of a plug-in rotary movement. For allowing the adapter element to be connected to the base plate, other alternatives are conceivable, including riveting, welding or screwing the adapter element to the base plate.

According to a preferred embodiment of the invention, the adapter element comprises at least two, preferably three, counter bayonet fastening means, in particular at least two, preferably three, locking protrusions. Said respective locking protrusions advantageously comprising at least one shaft, such as at least one tubular or cone-shaped shaft, and at least one hat, such as at least one flat or globular or cone-shaped hat. Moreover, the base plate comprises at least two, preferably three, further mounting devices, in particular engagement recesses, corresponding to the counter bayonet fastening means of the adapter element .

With other words, according to an advantageous embodiment of the present invention, the bayonet connection of the adapter element has in each case at least two bayonet connection means, in particular comprising in each case at least two locking projections on the adapter element and at least two corresponding engagement recesses on the base plate. The locking projections can be mushroom shaped, comprising at least one shaft, such as at least one tubular or cone-shaped shaft, and at least one hat, such as at least one flat or globular or cone-shaped hat. In embodiments, the shaft can exhibit an oval cross section.

Thus, the adapter element is on one hand assigned to the novel interface comprising the screw thread connection means and on the other hand it can be connected itself with the base plate by means of a bayonet connection. According to this embodiment, each filter cartridge is indirectly mounted on the base plate via a respective adapter element by means of a bayonet connection. Preferably, the bayonet fastening means is arranged at the adapter element adjacent to the flow openings.

The adapter element is advantageously designed as a lifetime component. This means, it normally remains at the base plate for the whole life of the air filter device even when the filter cartridge is replaced or exchanged.

The filter cartridge is preferably radially sealed with respect to the base plate, in particular via at least one radial sealing means. This leads to the advantage, that even if the filter cartridge with time tilts down a little obliquely creating a narrow gap on the top side, the radial sealing means reliably seals the filter cartridge with regard to the base plate.

Said radial sealing means can be assigned directly to the adapter element or to the filter cartridge. Preferably, the radial sealing means is carried by a screw thread connection collar, such as a tubular socket section comprising the screw thread connection means, assigned to the adapter element.

The radial sealing means is designed for being arranged between a radial peripheral edge of the open end cap of the filter cartridge and a radial peripheral edge, such as a tubular nozzle segment, of the adapter element.

According to a preferred embodiment of the present invention, the radial sealing means is designed for cooperating with the bayonet fastening means, in particular to engage with the bayonet slot, to prevent the bayonet connection to be accidentally loosened or turned back.

Independently thereof or in connection therewith, the adapter element can be axially sealed with respect to the base plate, in particular via at least one axial sealing means or at least one injected adhesive element. With the axial seal, the adapter is sealed against the base plate, in particular against a sheet metal part of the base plate. This axial sealing means supports to avoid leakiness of the air filter device due to lowering of the end of the filter cartridge caused by weight and gravity. Said axial sealing means or adhesive can for example be arranged between the adapter element and the edge of the base plate surrounding one of the flow openings. The axial seal can be made from elastomer for example by means of two component injection molding technology.

Consequently, according to a preferred embodiment of the invention in addition to the radial sealing element or inner sealing element, which goes against the collar of the filter cartridge, the air filter device comprises a thin axial profile sealing means or injected adhesive for sealing the adapter element against the base plate and/or to prevent theoretical leakage through the bayonet connection. As stated before, alternatively to an axial sealing means the adapter element can be sealed by adhesive. Adhesive then also provides anti-reverse protection, which means that the bayonet connection cannot be accidentally loosened when filter cartridge is mounted or disassembled.

Each filter cartridge is advantageously formed hollow cylindrically and designed to be flown-through radially by the gas stream to be filtered.

According to an embodiment of the present invention, the screw thread collar of the adapter element is flattened on several, such as on four, circumferential positions, arranged in a diagonal arrangement. This leads to the advantage that several adapter elements can be mounted side by side in tight space.

Moreover, the flattening of the screw thread collar may protect the bayonet connection to the base plate from being mounted incorrectly, because only if the flattening is arranged correctly, the adapters can be mounted next to each other or on top of each other. With this flattening, for example four adapters fit on one base plate, such as a sheet metal base support.

Reinforcement of the screw thread connection means can be achieved for example by ribs arranged at the collar of the open end cap of the filter cartridge or at the screw thread collar of the adapter element.

The flow openings of the base plate are preferably arranged in a symmetric or regular pattern, in particular rectangular-grid like. Moreover, the bayonet fastening elements are preferably arranged in a symmetric or regular pattern to be able to arrange the filter cartridges next to each other. This arrangement of the flow openings as well as of the bayonet fastening elements together with the diagonal arrangement of thinner-walled circumferential position of the adapter element allows to use the space of the base plate optimally and to arrange as many filter cartridges as possible with maximum diameter one above the other and next to each other.

The adapter element can consist of plastic leading to the advantage that it can be very cost-effectively manufactured. To provide high durability and stability of the adapter element, it can also consist of metal, for example of sheet metal.

The radial peripheral edge of the open end cap of the filter cartridge may comprise a raised rim extending therefrom. The raised rim may be arranged at a position on the open end cap to fit the flow opening on the adapter or on the base plate. The raised rim provides a centering function. The raised rim helps to easily locate the correct position of the filter cartridge on the adapter element or base plate. Where the radial sealing means is assigned to the filter cartridge, the radial sealing means may be arranged between the raised rim and the radial peripheral edge of the open end cap.

Alternatively, the raised rim may be assigned to the adapter element on the side facing the filter cartridge. A raised rim may be provided around the circumference of each flow opening of the adapter element. In this embodiment, the filter cartridge may comprise a corresponding depression in the opening of the open end cap to fit the raised rim.

According to the present invention, the filter medium body of the filter cartridge comprises at least one gas filter medium or particle filter medium. Said gas filter medium advantageously comprises at least one adsorbent, in particular at least one activated carbon and/or zeolite and/or molecular sieve. Said adsorbent gas filter medium can be designed as a bulk. In this embodiment the filter medium body provides a pouring chamber, which is delimited by an outer shell wall and an inner shell wall and into which an adsorbent bulk in granular particle form is filled. Alternatively, the gas filter medium can be for example a wound filter medium.

The present invention principally relates to loose-fill applications, such as beds, cartridges and modules, in molecular filtration. The present invention in more detail relates to the use of an adapter element as described above for connecting a filter cartridge, in particular for a particle filter cartridge or for a gas phase air filter cartridge, as described above to a base plate. Moreover, the present invention relates to the use of the filter cartridge as described above in an air filter device as described above. In general, said air filter cartridge can be used in supply, recirculation, and exhaust air systems in commercial, industrial, and process applications, such as airports. Areas of applications are for example adsorption of odors, toxic gaseous pollutants, hydrocarbons and solvents.

In particular, the present invention finally relates to the use of at least one adapter element as described above for retrofitting an air filter device according to the technical field into an air filter device as described above.

### Brief explanation of the drawings

As already discussed above, there are several options to embody as well as to improve the teaching of the present invention in an advantageous manner. To this aim, reference is made to the claims respectively dependent on claim 1; further improvements, features and advantages of the present invention are explained below in more detail with reference to seven preferred embodiments by way of example and to the accompanying drawings where
- Fig. 1: shows in longitudinal section a first embodiment of the air filter device according to the present invention comprising a first embodiment of an adapter element according to the present invention with a screw thread connection means to mount the filter cartridge and a bayonet connection to mount the adapter element to the base plate; moreover figure 1 shows a first embodiment of a filter cartridge of the present invention, which filter cartridge can be exchanged according to the method of the present invention;
- Fig. 2: shows a perspective view of the air filter device of figure 1 from diagonally in front;
- Fig. 3: shows a perspective view of the air filter device of figure 1 from diagonally behind;
- Fig. 4: shows a front view of the base plate of the air filter device of figure 1;
- Fig. 5: shows a longitudinal section the air filter device of figure 1, wherein the view of figure 5 is cut along the section line A marked in figure 4 and wherein figure 1 depicts a detailed view of section B depicted in figure 5;
- Fig. 6: shows a perspective view of the filter cartridge of figure 1 from diagonally in front;
- Fig. 7: shows a perspective view of the filter cartridge of figure 1 from diagonally behind;
- Fig. 8: shows a perspective view of the adapter element of figure 1 from diagonally in front;
- Fig. 9: shows a perspective view of the adapter element of figure 1 from diagonally behind;
- Fig. 10: shows a schematically view of an embodiment of a plant building air filtration comprising the air filter device of claim 1;
- Fig. 11: shows in longitudinal section a second embodiment of the air filter device according to the present invention comprising a second embodiment of an adapter element according to the present invention with a screw thread connection means to mount the filter cartridge to the adapter element and a form-fit connection to mount the adapter element to the base plate; moreover figure 11 depicts a filter cartridge being similar to the first embodiment of the filter cartridge, which filter cartridge can be exchanged according to the method of the present invention;
- Fig. 12: shows a perspective view of the air filter device of figure 11 from diagonally in front;
- Fig. 13: shows a front view of the base plate of the air filter device of figure 11;
- Fig. 14: shows in smaller magnification a longitudinal section the air filter device of figure 11, wherein figure 11 depicts a detailed view of section B depicted in figure 14;
- Fig. 15: shows a perspective view of the adapter element of figure 11 from diagonally in front;
- Fig. 16: shows a perspective view of the adapter element of figure 11 from oblique behind;
- Fig. 17: shows in longitudinal section a third embodiment of the air filter device according to the present invention comprising a third embodiment of an adapter element according to the present invention as well as a filter cartridge being similar to the first embodiment of the filter cartridge, which filter cartridge can be exchanged according to the method of the present invention;
- Fig. 18: shows a perspective view of the air filter device of figure 17 from diagonally in front;
- Fig. 19: shows a perspective view of the adapter element of figure 17 from diagonally in front;
- Fig. 20: shows a perspective view of the adapter element of figure 17 from oblique behind;
- Fig. 21: shows in longitudinal section a fourth embodiment of the air filter device according to the present invention comprising a fourth embodiment of an adapter element according to the present invention as well as an embodiment of a filter cartridge being similar to the first embodiment of the filter cartridge, which filter cartridge can be exchanged according to the method of the present invention;
- Fig. 22: shows a perspective view of the air filter device of figure 21 from diagonally in front;
- Fig. 23: shows a perspective view of the air filter device of figure 21 from oblique behind;
- Fig. 24: shows a further detailed view in longitudinal section of the fourth embodiment of the air filter device according to the present invention;
- Fig. 25: shows a perspective view of the filter cartridge of figure 21 from diagonally in front;
- Fig. 26: shows a perspective view of the filter cartridge of figure 21 from oblique behind;
- Fig. 27: shows a perspective view of the adapter element of figure 21 from diagonally in front;
- Fig. 28: shows a perspective view of the adapter element of figure 21 from oblique behind;
- Fig. 29: shows in longitudinal section a fifth embodiment of the air filter device according to the present invention comprising a fifth embodiment of an adapter element according to the present invention as well as a second embodiment of a filter cartridge according to the present invention, which filter cartridge can be exchanged according to the method of the present invention;
- Fig. 30: shows a perspective view of the filter cartridge of figure 29 from diagonally in front;
- Fig. 31: shows a perspective view of the filter cartridge of figure 29 from oblique behind;
- Fig. 32: shows a perspective view of the adapter element of figure 29 from diagonally in front;
- Fig. 33: shows a perspective view of the adapter element of figure 29 from oblique behind;
- Fig. 34: shows in longitudinal section a sixth embodiment of the air filter device according to the present invention comprising a sixth embodiment of an adapter element according to the present invention as well as the second embodiment of the filter cartridge, which filter cartridge can be exchanged according to the method of the present invention;
- Fig. 35: shows a perspective view of the filter cartridge of figure 34 from diagonally in front;
- Fig. 36: shows a perspective view of the filter cartridge of figure 34 from oblique behind;
- Fig. 37: shows a perspective view of the adapter element of figure 34 from diagonally in front;
- Fig. 38: shows a perspective view of the adapter element of figure 34 from oblique behind;
- Fig. 39: shows in longitudinal section a seventh embodiment of the air filter device according to the present invention comprising a seventh embodiment of an adapter element according to the present invention as well as the second embodiment of the filter cartridge, which filter cartridge can be exchanged according to the method of the present invention;
- Fig. 40: shows a perspective view of the air filter device of figure 39 from diagonally in front;
- Fig. 41: shows a front view of the base plate of the air filter device of figure 39;
- Fig. 42: shows a perspective view of the adapter element of figure 39 from diagonally in front; and
- Fig. 43: shows a perspective view of the adapter element of figure 39 from oblique behind.

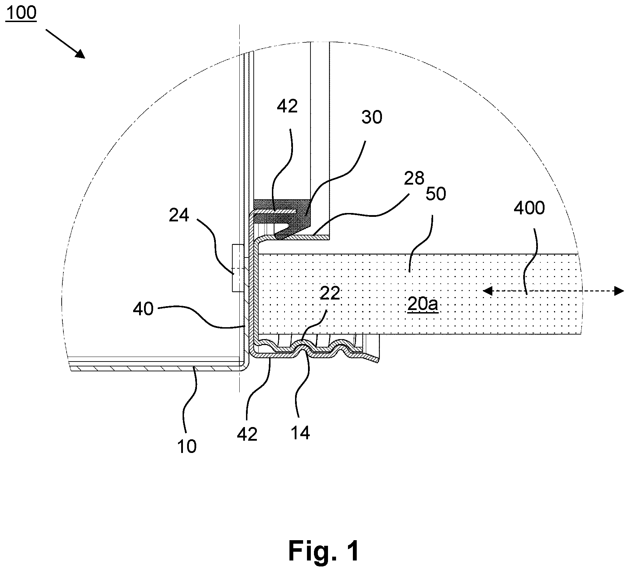

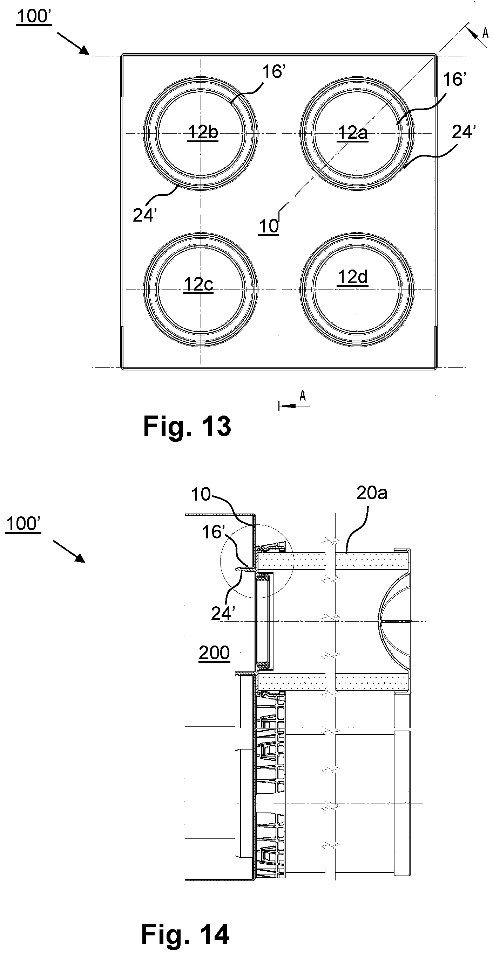

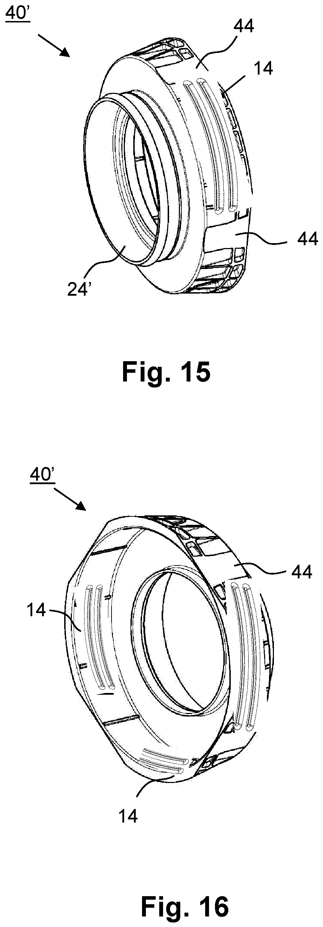

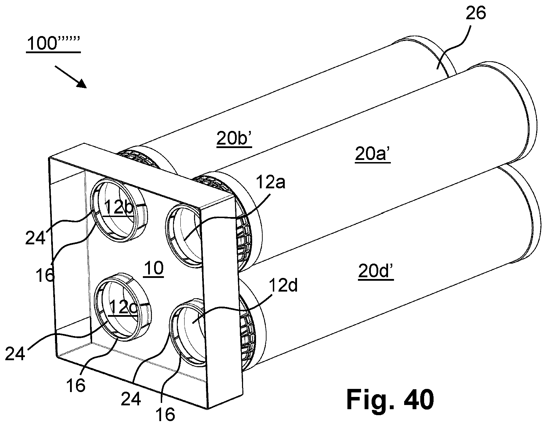

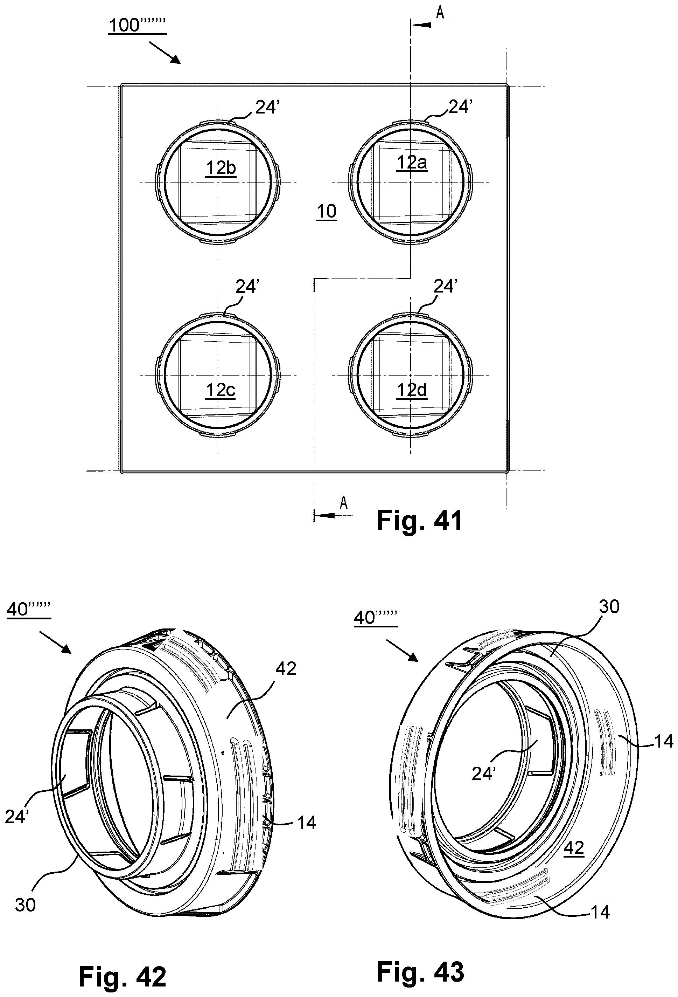

The same reference numerals are used for corresponding parts in Fig. 1 to Fig. 43.

### Best way of embodying the present invention

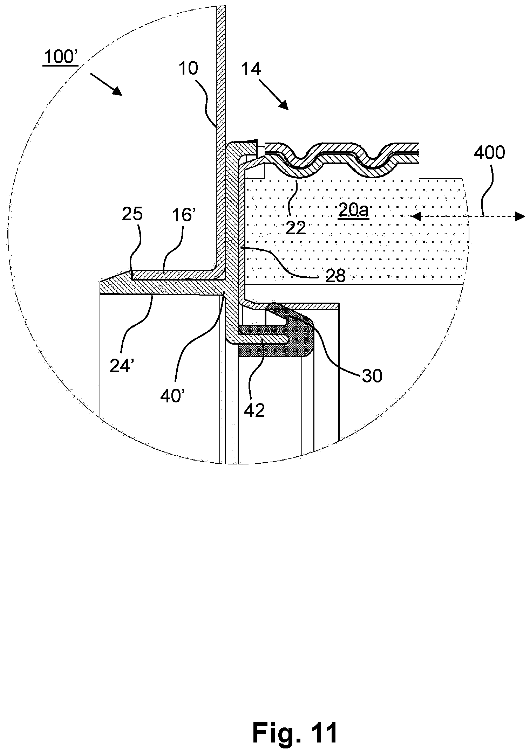

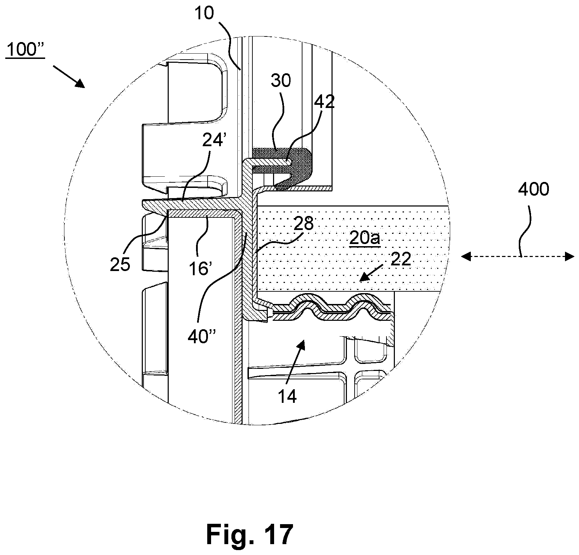

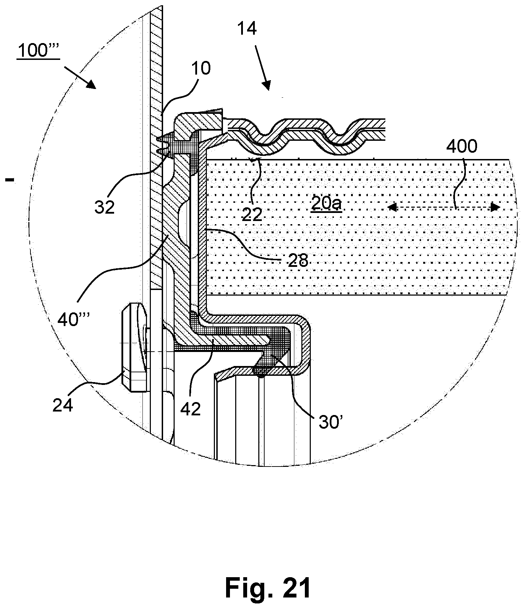

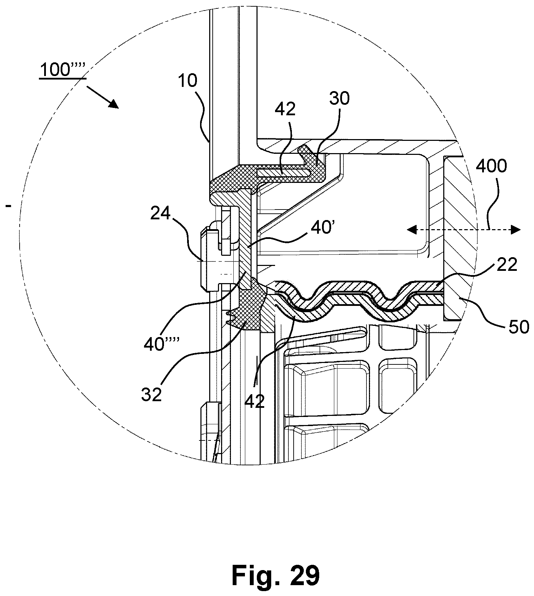

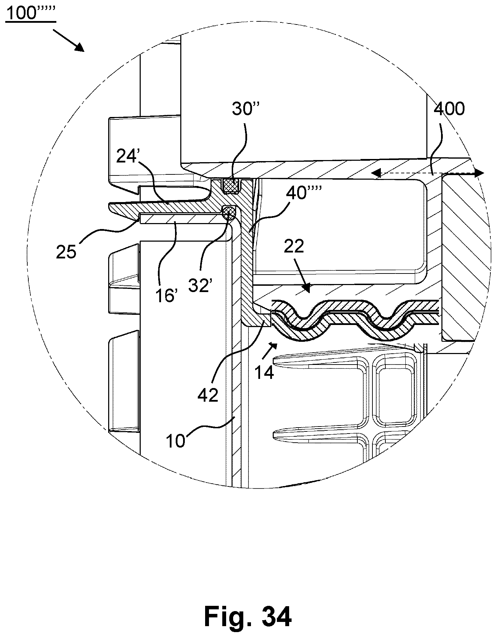

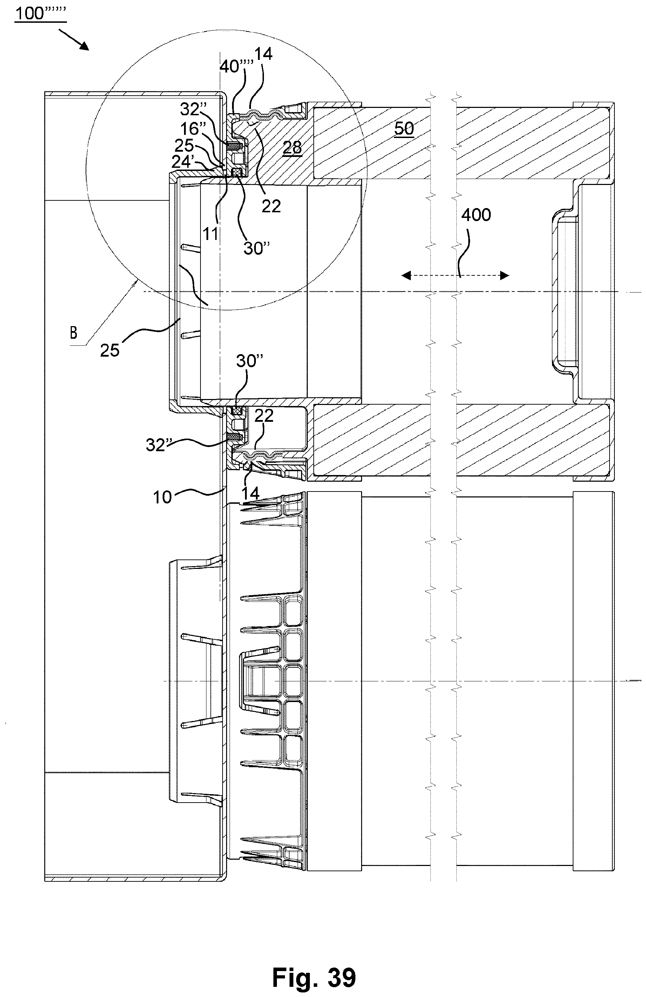

In order to avoid unnecessary repetitions, the following description regarding the embodiments, characteristics and advantages of the present invention relates (unless stated otherwise)
- to the first embodiment of the air filter device 100 according to the present invention comprising a first embodiment of a filter cartridge 20a, 20b, 20c, 20d according to the present invention and a first embodiment of an adapter element 40 according to the present invention (cf. Figs. 1 to 10) as well as
- to the second embodiment of the air filter device 100' according to the present invention comprising an embodiment of a filter cartridge 20a, 20b, 20c, 20d being similar to the first embodiment of the filter cartridge and a second embodiment of an adapter element 40' according to the present invention (cf. Figs. 11 to 16) as well as
- to the third embodiment of the air filter device 100" according to the present invention comprising an embodiment of a filter cartridge 20a, 20b, 20c, 20d being similar to the first embodiment of the filter cartridge and a third embodiment of an adapter element 40" according to the present invention (cf. Figs. 17 to 20), as well as
- to the fourth embodiment of the air filter device 100‴ according to the present invention comprising an embodiment of a filter cartridge 20a, 20b, 20c, 20d being similar to the first embodiment of the filter cartridge and a fourth embodiment of an adapter element 40‴ according to the present invention (cf. Figs. 21 to 28), as well as
- to the fifth embodiment of the air filter device 100"" according to the present invention comprising a filter cartridge 20a', 20b', 20c', 20d' being similar to the second embodiment of the filter cartridge and a fifth embodiment of an adapter element 40ʺʺ according to the present invention (cf. Figs. 29 to 33), as well as
- to the sixth embodiment of the air filter device 100‴ʺ according to the present invention comprising a filter cartridge 20a', 20b', 20c', 20d' being similar to the second embodiment of the filter cartridge and a sixth embodiment of an adapter element 40‴ʺ according to the present invention (cf. Figs. 34 to 38), as well as
- to the seventh embodiment of the air filter device 100‴‴ according to the present invention comprising a filter cartridge 20a', 20b', 20c', 20d' being similar to the second embodiment of the filter cartridge and a seventh embodiment of an adapter element 40‴‴ according to the present invention (cf. Fig. 39 to 43).

All seven embodiments 100, 100', 100", 100‴, 100ʺʺ, 100‴ʺ, 100‴‴ being operated according to the method of the present invention.

As depicted in figures 1 to 43, the filter cartridges 20a, 20b, 20c, 20d; 20a', 20b', 20c', 20d'; are connected to the base plate 10 by means of a radial screw thread connection 14, 22. An additional adapter element 40, 40', 40", 40‴, 40"", 40""', 40‴‴ is used for this purpose, which is mounted once in the mounting frame 10 and remains there as a service life part.

An interrupted helical groove 14 is integrated in the adapter element 40, 40', 40", 40‴, 40"", 40‴ʺ, 40‴‴. This helical groove 14 allows for easy and secure engagement between the adapter element element 40, 40', 40", 40‴, 40ʺʺ, 40‴ʺ, 40‴‴ and an open end cap or lower end plate 28; 28' of the corresponding filter cartridge 20a, 20b, 20c, 20d, 20a', 20b', 20c', 20d'

The open end cap 28 can be formed as an injection molded or sheet metal part and is formed corresponding to a radial sealing 30; 30'. Figure 17 shows a first embodiment of an open end cap, comprising a radial sealing 30 being produced separately and then mounted, e. g. clamped or glued, on the adapter element 40" as lifetime part. Figure 21 shows an embodiment of a radial sealing 30' produced e.g. as two-component injection molded part together with the adapter element 40‴.

Figure 1 depicts a longitudinal section of the adapter element 40 with radial sealing means 30 attached on adapter element's collar 42 being designed for surrounding an axial end of the filter medium body 50 and mounted filter cartridge integrated in an upper end plate 28. Additionally, the sides of collar 42 surrounding the axial end of the filter medium body 50 provide a centering function to easily locate the correct position of the filter cartridge on the adapter element 40.

For assembling the filter cartridges to the base plate 10, the filter cartridges 20a, 20b, 20c, 20d, 20a', 20b', 20c' only need to be screwed into the adapter part 40, 40', 40", 40‴, 40"", 40‴ʺ. Thus, the filter cartridges can be assembled to the base plate 10 by means of a rotational movement. Disassembly of the cartridge takes place unscrewing the filter cartridges.

Thus, the filter cartridges are mounted on the base plate 10 by simply screwing them into an additional housing part, namely an adapter element 40, 40', 40", 40‴, 40"", 40‴ʺ to be installed once. Each filter cartridge is attached to the adapter element 40, 40', 40", 40‴, 40ʺʺ, 40‴ʺ by means of a screw thread connection 14, 22 and the adapter element 40, 40', 40", 40‴, 40"", 40‴ʺ in turn is attached to the mounting plate 10 by means of a bayonet connection 16, 24 (cf. figures 1 to 10 and 21 to 33) or by means of a form-fit connection 16', 24' (cf. figures **11** to 20 and 34 to 43).

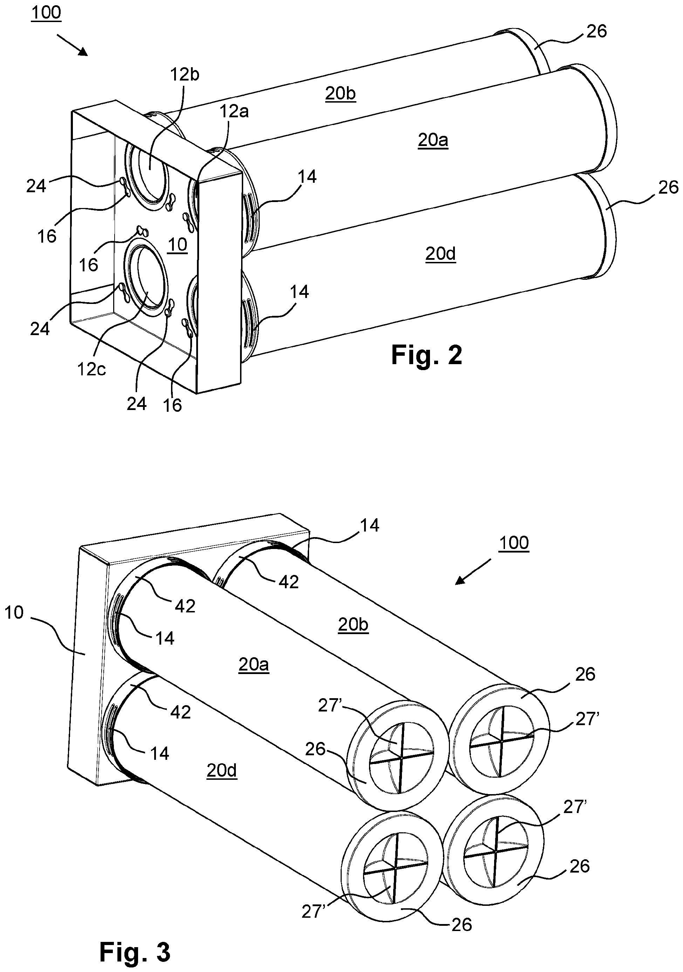

As depicted in figures 2, 4, 8 and 22 the bayonet fastening means 16 can be designed for example as a conventional three-hole bayonet fastening means. Thus, the adapter element 40, 40‴ can comprise three bayonet pins 24 molded on, which allows retrofit installation in existing filter cartridges. As depicted in figure 1 said bayonet pins 24 can be shaped in a mushroom-type, comprising at least one shaft, such as at least one tubular or cone-shaped shaft, and at least one hat, such as at least one flat or globular or cone-shaped hat.

Alternatively to the conventional three-hole bayonet, the counter bayonet fastening means 24 can be designed for example as a simple circular hole of the base plate 10 (not shown).

As can be seen in figure 21, the adapter element 40‴ can be fixed with bayonet 16, 24 and, additionally for securing and tightening, glued on the base plate 10.

The adapter element 40, 40', 40", 40‴, 40ʺʺ, 40‴ʺ contains four groove elements 14 which form together a helical groove. During assembly, the groove elements 14 engage in a circumferential ridge 22 of the lower end plate 28 of the filter cartridge and hold the filter cartridge in the end position.

Independently thereof or in connection therewith, a radially acting sealing means 30, 30', 30" is also integrated in the adapter piece 40, 40', 40", 40‴, 40"", 40""', 40‴‴ as a service life solution. The radial seal 30 eliminates the tolerance-related disadvantages of the axial seal 32, 32', 32" being compressed at the lower edge due to gravity and weight of the filter cartridge.

The radial sealing means 30, 30', 30" of the adapter element 40, 40', 40", 40‴, 40"", 40‴ʺ, 40""" which ensures the seal to the filter cartridge, is advantageously a component that enhances the service life for reasons of sustainability. The radial sealing means 30 can be mounted, for example by plugging it into the adapter component 40 as a separate component. An example of this is shown in figure 1, which depicts a sealing lip 30 mounted on a sheet metal adapter element 40.

Alternatively, as for example shown in figures 21 to 28, the radial sealing means 30 can be manufactured as a two-component part together with the adapter element 40‴ as an injection-molded part. This allows the radial sealing means 30 to be a radial injection-molded seal, which provides a seal between the adapter element 40‴ and the filter cartridge 20a, 20b, 20c, 20d.

As shown in figures 1 to 10, in the first embodiment of the adapter element (40), the radial sealing means (30) can be arranged on the adapter element (40). However, it could also be arranged on the filter cartridge. In this case, the adapter element (40, 40', 40", 40‴) would only have an at least partly circumferential wall (42) or screw thread collar as a counter sealing surface (not shown).

The adapter element 40 depicted in figures 1 to 10 is made of sheet metal. The adapter element 40 depicted in figures 11 to 28 is made of plastic, which is recognizable by a ribbing.

The second embodiment of an adapter element 40' according to the present invention as well as the third 40", sixth 40‴ʺ and seventh 40‴‴ embodiment of an adapter element according to the present invention is mounted on the base plate 10 by means of a form-fit connection 16', 24' instead of a bayonet connection 16, 24. This leads to the advantage, that bayonet openings are no longer required, and the base plate 10 can be manufactured more easily.

In more detail, as depicted in figures 11, 12, 17, 18, 34 and 39 the counter form-fit connection means 24' of the adapter element 40'; 40", 40‴ʺ, 40‴‴ of the second, the third, the sixth and the seventh embodiment is designed as at least one snapping collar, in particular a flow opening tubular nozzle segment, being designed to extend through at least one of the flow openings 12a, 12b, 12c, 12d of the base plate 10 and being formed at least partly circumferential.

Said snapping collar 24' is fitted with a locking recess, in particular with an undercut 25, which is designed to engage directly or indirectly with the edge of the base plate 10 adjacent to an opening 11, 12a, 12b, 12c, 12d, of the base plate 10, for example adjacent to a fixation opening 11 or to the flow opening 12a, 12b, 12c, 12d, to form the form-fit connection.

In the second 100', third 100" and sixth 100‴ʺ embodiment of the air filter device of the present invention, for forming a form-fit connection with the counter form-fit connection means 24' of the adapter element 40', 40", 40‴ʺ the further mounting device 16' of the base plate 10 is designed as a collar surrounding the flow opening 12a, 12b, 12c, 12d, in particular extending perpendicularly with the sheet metal piece, of the base plate 10.

As depicted in figure 39, the seventh embodiment 40‴‴ of the adapter element is similar to the embodiments of Fig. 11, 17 and 34 but spares the collar 16' of the base plate 10. In the seventh embodiment of the air filter device 100‴‴ of the present invention, the edge of the base plate 10 adjacent to a fixation opening 11, such as a hole, serves as further mounting device 16". Thus, the counter form-fit connection means 24' of the seventh embodiment of the adapter element 40‴‴ is designed to engage directly with the edge 16" of the base plate 10 adjacent to the fixation opening 11 of the base plate 10. The fixation openings 11, for example, can be punched or cut into the base plate 10. As the counter form-fit connection means 24' of the adapter 40‴‴ can be directly snapped onto the plate of the base plate 10, the only tolerance is the thickness variation of the base plate 10, for example of the sheet metal of the base plate 10. As a further beneficial technical effect, the base plate 10 can be produced easier.

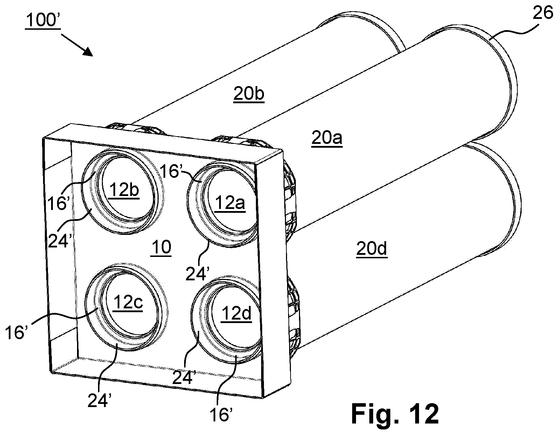

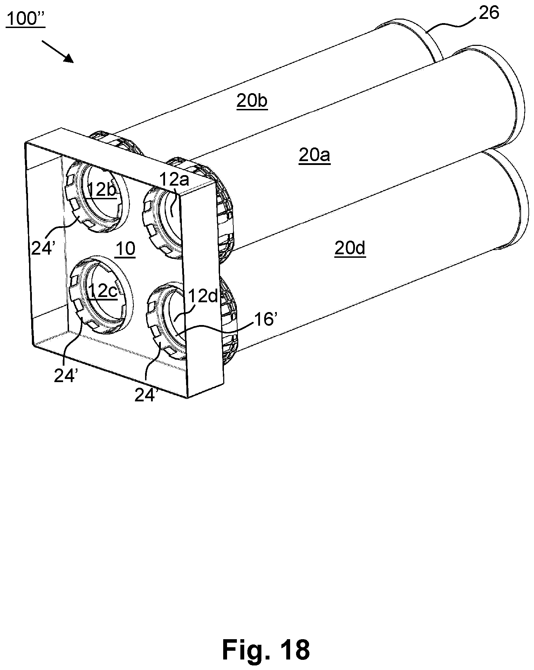

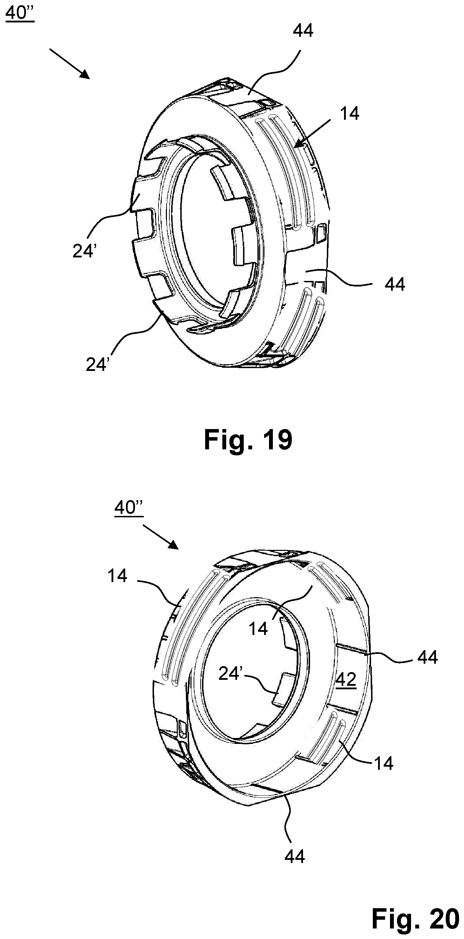

In the second embodiment of the adapter element 40', the snapping collar 24' is designed continuously (cf. figures 11 and 12) and in the third, sixth and seventh embodiment of the adapter element 40", 40""', 40‴‴ the snapping collar 24' is designed discontinuously (cf. figures 18 and 19). With other words in the third, sixth and seventh embodiment of the adapter element 40", 40‴ʺ, 40‴‴ depicted in figure 18 the counter form-fit connection means 24' is interrupted to reduce the assembly forces required for connecting the counter form-fit connection means 24' on the base plate 10. The snapping collar 24' can for example be implemented as an interrupted snap collar.

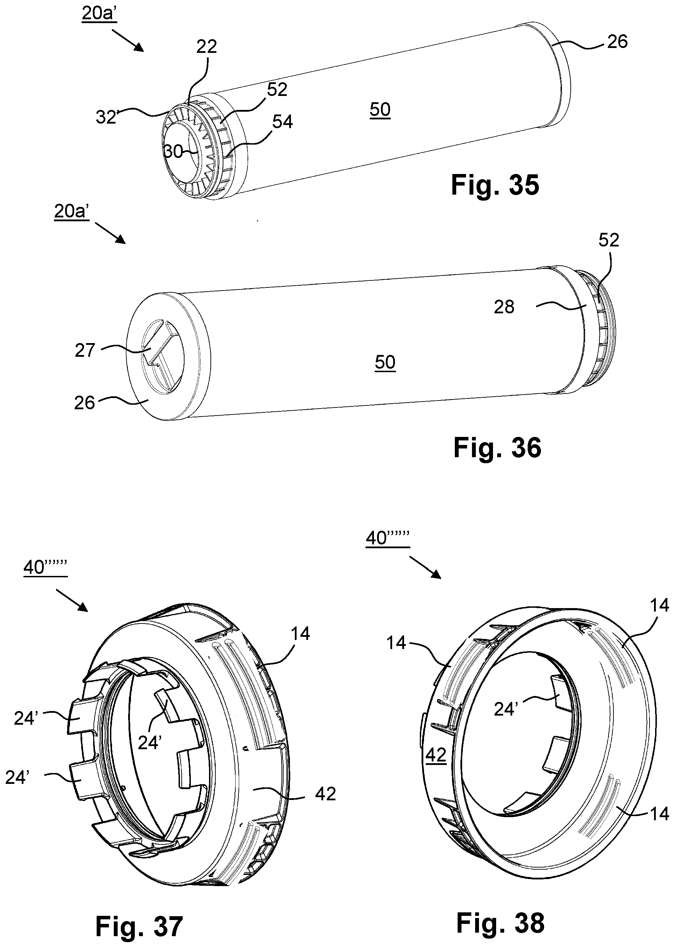

The filter cartridge of the seventh embodiment of the air filter device may be the same as the filter cartridge depicted in figures 35 and 36.

In the second embodiment of the adapter element 40', the latching with respect to the filter cartridge is similar to the latching in the first embodiment of the adapter element 40.

The interface between the filter cartridge and the base plate 10 comprises, in all embodiments an open-end disc 28 with at least one circumferential helical ridge 22 on outer shell surface. The ridge shape 22 may vary depending on forces to be achieved.

The radial sealing means 30 depicted in figures 11 to 28 is identical to the type depicted in figures 1 to 10. Said sealing means 30 is mounted with sealing lips, arranged on the adapter element 40, in more detail on a tubular nozzle segment 42 of the adapter element 40'.

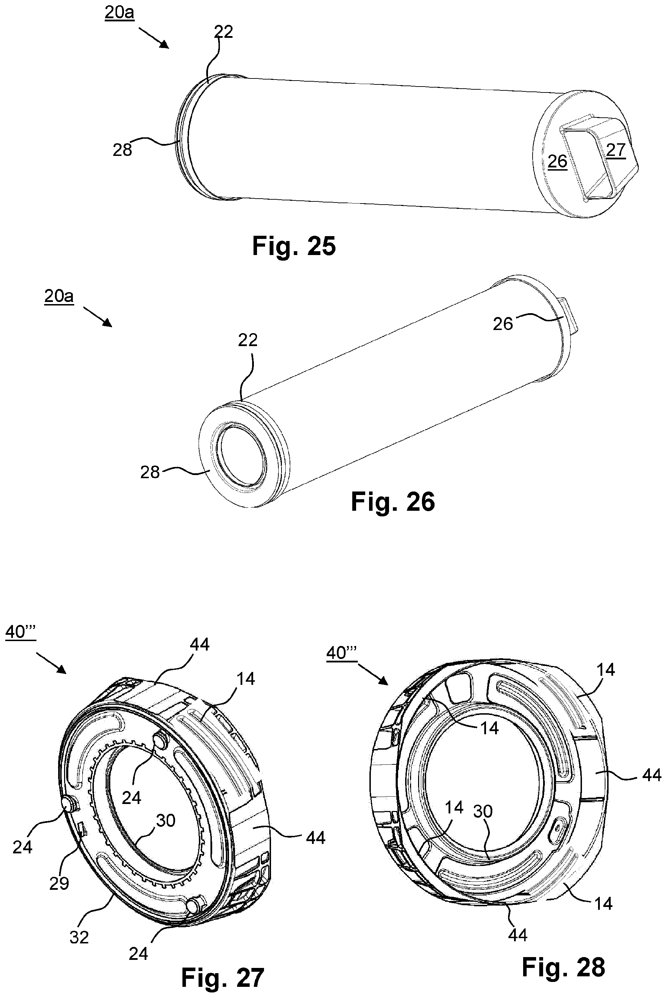

As depicted in figure 25 and 36 a handle 27 or grip function can be integrated into the closed end cap or upper end plate 26 of the filter cartridge. Said handle 27 can be combined with any embodiment of the filter cartridges 20a, 20b, 20c, 20d, 20a', 20b', 20c', 20d'.

Figure 3 depicts a second embodiment of the handle 27', namely crossed rips, for axial movement of the filter cartridge 20a, 20b, 20c, 20d; 20a', 20b', 20c', 20d'.

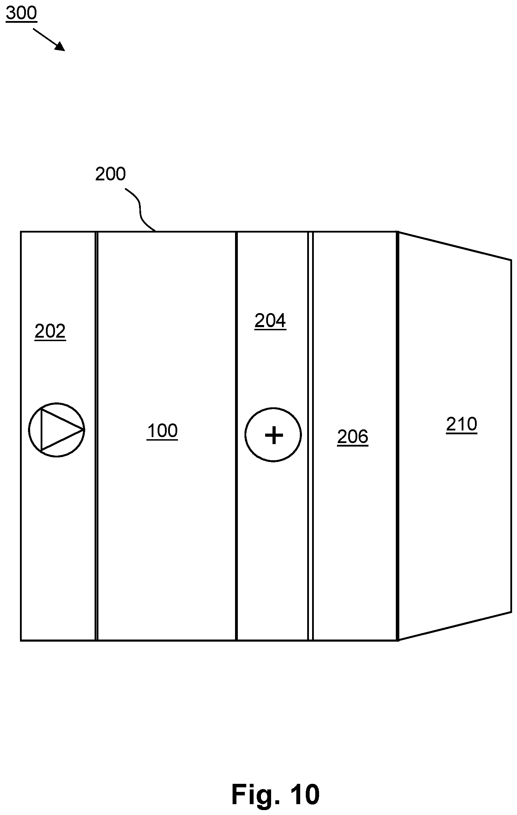

As depicted in figure 10 the base plate 10 of the air filter device is designed to fit into a filter housing 200, specifically in a flow channel 210, of a plant for gas filtration, particularly for building air filtration. It is positioned between an upstream unfiltered air side or row air side and a downstream filtered air side or clean air side.

As shown in Figures 27 and 28, the adapter element 40‴ is equipped with four groove elements 14, which must always be in the same position to align the bayonet pins 24. However, in the base plate 10, there are only three bayonet holes 16. To accommodate this, the wall of the adapter element 40‴ is partially flattened, defining the arrangement of the pins 24 in such a way that the bayonet lugs 16 and 24 can be correctly mounted. Specifically, two of the groove elements 14 should always be positioned at the top at a 45-degree angle.

Unlike the flattened parts, the adapter wall with ribs shown in Figures 27, 28, 19, and 20 is relatively rigid and sturdy. The screw thread connection mechanism, or helical groove 14, is positioned within the inner area of a screw thread collar 42 of the adapter element 40‴. Ribs are located on the outer perimeter of the screw thread collar 42, on the back of the helical groove 14. The stiff wall with ribs of the screw thread collar enhances the force applied to the helical groove 14.

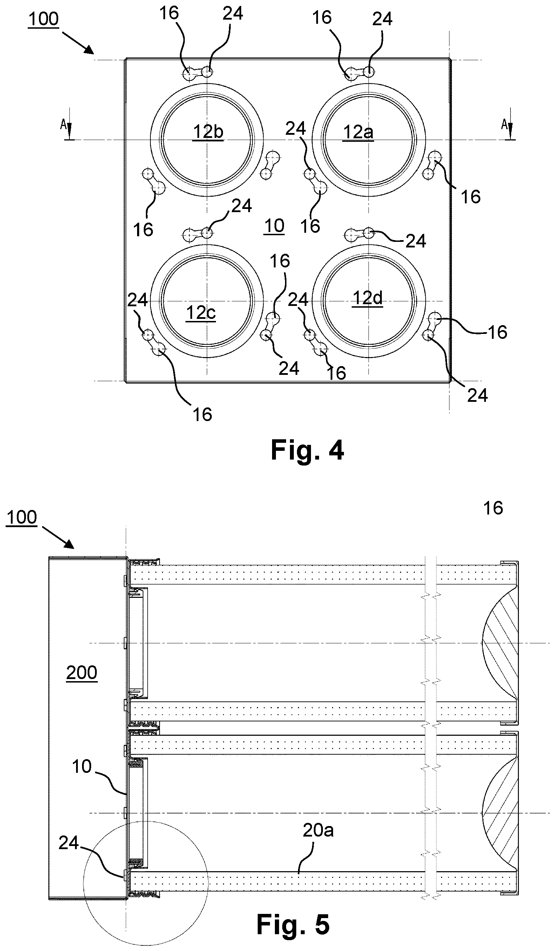

Moreover, figure 27 depicts an anti rotation device comprising a locking means 29, namely a single hump or nose. When finally mounted, this nose 29 snaps in the punched out bayonet hole 16 of the base plate 10. Mounted position could be seen in Fig 4.

The third, sixth and seventh embodiment of the adapter element 40", 40‴ʺ, 40""" of the present invention (cf. figures 29, 34 and 39) are similar to the second embodiment of the adapter element 40' depicted in figure 11. All embodiments 40', 40", 40‴ʺ, 40‴‴ comprise
- the snapping collar 24' for connecting the adapter element with the form fit connection element 16', 16" of the base plate 10,
- the screw thread connection means 14 for connecting the adapter element with the filter cartridge 20a, 20b, 20c, 20d, 20a', 20b', 20c', 20d' and
- the radial seal 30, 30', 30".

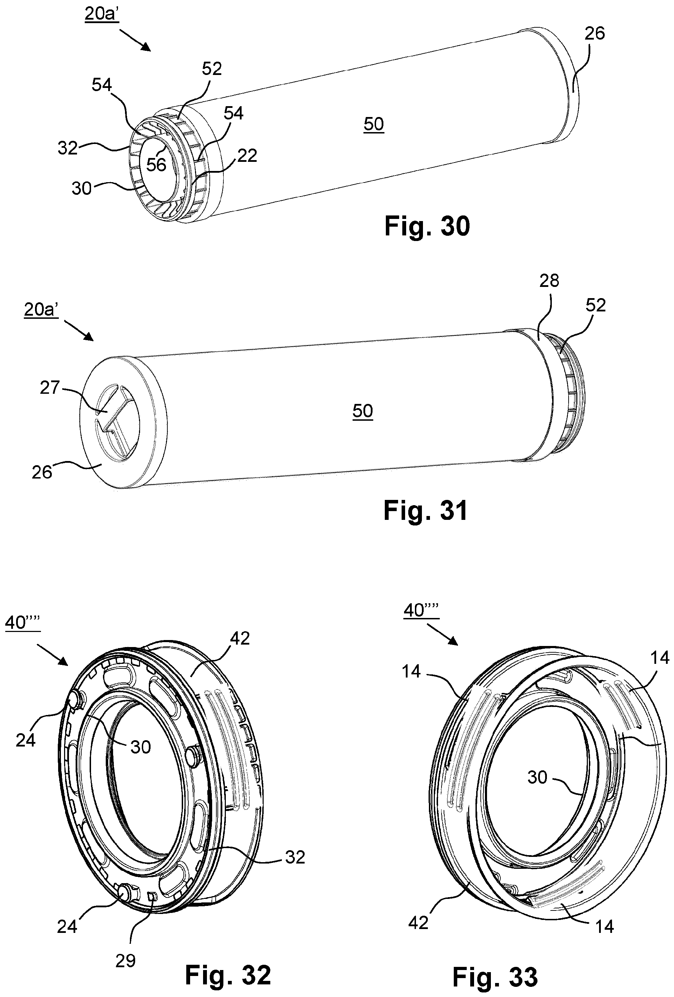

The sixth and seventh embodiments of the adapter element 40‴ʺ and 40‴‴ʺ of the present invention differ from the second embodiment 40' in terms of the sealing concept between the adapter and the base plate 10, as well as between the adapter and the filter cartridge. In the sixth embodiment, as shown in Figure 34, the sealing interface between the adapter element 40‴‴ʺ and the base plate 10 utilizes a circular or quadrangular axial sealing means 32', particularly an O-ring, instead of an axial sealing means provided by two-component injection molding or an injected adhesive element like glue material. Additionally, the sealing interface between the filter cartridge 20a', 20b', 20c', 20d' and the adapter element 40""", 40‴‴ʺ comprises a circular or quadrangular radial sealing means 30", such as a quad ring. This simplifies the sealing means 32', 30" and reduces complexity. As depicted in Figures 30 and 35, the sealing interface 56 also includes a raised rim, which serves as a centering function to easily position the filter cartridge 20a', 20b', 20c', 20d' correctly on the adapter element 40""", 40‴‴ʺ.

In the seventh embodiment of the air filter device 100‴‴, shown in Figure 39, the axial sealing means 32" between the adapter element 40‴‴ʺ and the base plate 10 is a cylindrical sealing means 32, which can be a pierced rubber hose or a similar seal. As depicted in Figure 39, the axial seal 32 is securely held in a circumferential groove of the adapter element 40‴‴ʺ.

The first, fifth, sixth and seventh embodiment of the adapter element 40"", 40‴ʺ, 40‴‴ differ from the second to fourth embodiment of an adapter element 40, 40', 40", 40‴ in that the outer diameter of the screw thread collar 42 is circular, in particular that the screw thread collar 42 is a tubular socket section. This leads to the advantage, that the filter cartridge can be mounted at any angle of rotation to the adapter element 40ʺʺ, 40‴ʺ, 40""".

A further difference is that the screw thread collar 42, as well as the connection interface 52 of the open end cap 28 in the fifth, sixth, and seventh embodiments of the air filter device, are longer, i.e. extending more in the axial direction, compared to the screw thread collar 42 and connection interface of the first to fourth embodiments of the air filter device according to the present invention. The longer thread collar can comprise more turns or windings of the helical groove, enhancing the stability of the thread connection and overall structural integrity.

As can be seen from figure 30 to 32, 35 to 38 and 40 at the fifth, sixth and seventh embodiment of the adapter element 40"", 40""', 40‴‴ the screw thread collar 42 comprises the same outer diameter as the open end cap 28 of the filter cartridge 20a', 20b', 20c', 20d'. This leads to the advantage that there is enough space for the screw thread collar 42 to be formed circular and to be mounted to the mounting device 16', 16" of the base plate 10.

All embodiments depicted in figures 1 to 43 enable fast, simple, assembly error-free mounting of the filter cartridge on the base plate 10 and improves the quality of the seal between the cartridge and the base plate 10 through the use of a radial lifetime seal 30.

### Reference Numbers

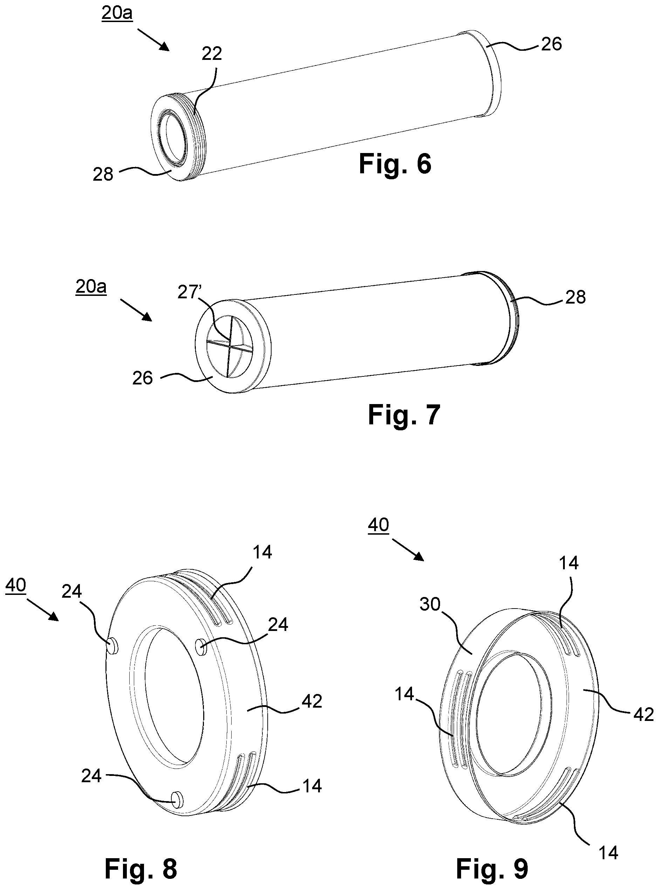

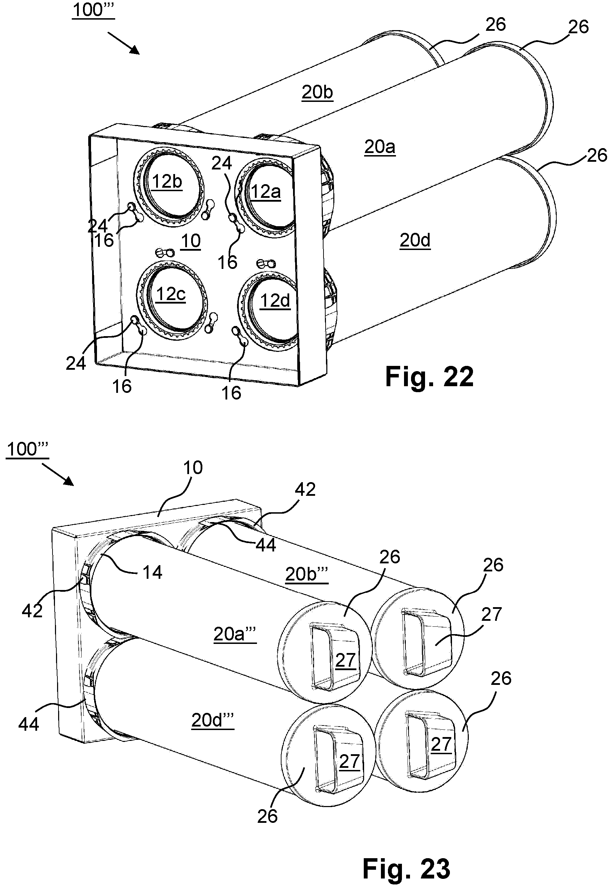

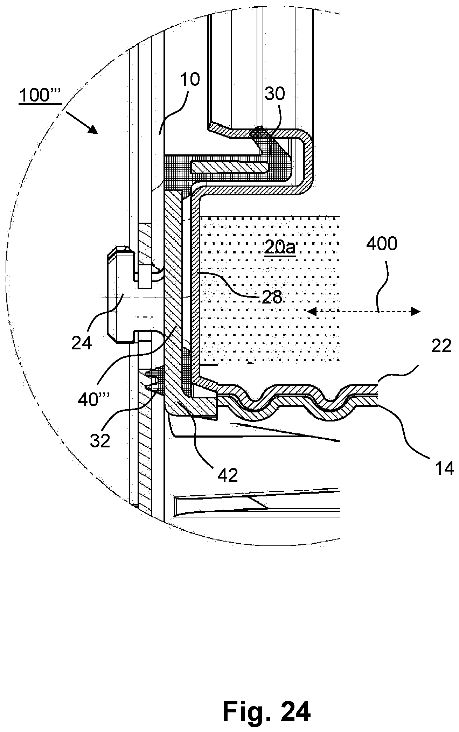

10 base plate, in particular mounting frame, such as sheet metal rack, for example sheet metal house, designed to fit in a filter housing 200 or in a filter unit 200
12a flow opening of the base plate 10
12b further flow opening of the base plate 10
12c further flow opening of the base plate 10
12d further flow opening of the base plate 10
14 mounting device or fitting device of the adapter element 40, 40', 40", 40‴ for assembling one filter cartridge 20a, 20b, 20c, 20d; 20a', 20b', 20c', 20d' each, in particular at least one screw thread connection means, such as at least one continuous or interrupted helical groove means, wherein the helical groove is grooved into an axially extending cylindrical or conical screw thread collar 42 of the adapter element 40; 40'; 40"; 40‴; 40""; 40‴ʺ; 40""", and
16 further mounting device or fitting device of the base plate 10 for assembling one filter cartridge 20a, 20b, 20c, 20d; 20a', 20b' 20c', 20d' each, in particular at least one bayonet fastening element, such as an engagement recess, for example a longitudinal slot at the end of which a short transverse slot is attached at a right angle; cf. figures 10 to 10 and 21 to 28;
16' further mounting device or fitting device of the base plate 10 for assembling one filter cartridge 20a', 20b', 20c', 20d'; 20a', 20b', 20c', 20d' each, in particular at least one form-fit connection element, such as a horizontal nose-piece or snap band or snap type or collar, for forming a form-fit connection or form-lock connection with a counter form-fit connection element 24' assigned to the adapter element 40', 40", 40‴ʺ; cf. figures 11 to 28 and 34;
16" further mounting device or fitting device of the base plate 10 for assembling one filter cartridge 20a, 20b, 20c, 20d, 20a', 20b', 20c', 20d' each, in particular at least one form-fit connection element, such as an edge adjacent to a fixation opening 11 of the base plate 10, which forms a form-fit connection or form-lock connection with a corresponding counter form-fit connection element 24' assigned to the seventh embodiment of the adapter element 40‴‴; as depicted in figure 39
20a filter cartridge, in particular adsorber cartouche or adsorption catalyst, for example cylinder shaped; first embodiment cf. figures 2, 3, 6, 7, 12, 21, 22, 23, 24, 25, 26
20b further, in particular second, filter cartridge, in particular adsorber cartouche or adsorption catalyst, for example cylinder shaped; first embodiment cf. figures 2, 3, 6, 7, 12, 21, 22, 23, 24, 25, 26
20c further, in particular third, filter cartridge, in particular adsorber cartouche or adsorption catalyst, for example cylinder shaped; first embodiment cf. figures 2, 3, 6, 7, 12, 21, 22, 23, 24, 25, 26
20d further, in particular fourth, filter cartridge, in particular adsorber cartouche or adsorption catalyst, for example cylinder shaped; first embodiment cf. figures 2, 3, 6, 7, 12, 21, 22, 23, 24, 25, 26
20a' filter cartridge, in particular adsorber cartouche or adsorption catalyst, for example cylinder shaped; second embodiment cf. figure 12
20b' further, in particular second, filter cartridge, in particular adsorber cartouche or adsorption catalyst, for example cylinder shaped; second embodiment cf. figure 12
20c' further, in particular third, filter cartridge, in particular adsorber cartouche or adsorption catalyst, for example cylinder shaped; second embodiment cf. figure 12
20d' further, in particular fourth, filter cartridge, in particular adsorber cartouche or adsorption catalyst, for example cylinder shaped; second embodiment cf. figure 12
22 counter mounting means of the open end cap 28 of the filter cartridge 20a, 20b, 20c, 20d; 20a', 20b', 20c', 20d', in particular counter screw thread connection means, such as a continuous or interrupted helical ridge that wraps around the surface of a cylindrical collar of the filter cartridges
24 further counter mounting means of the filter cartridge 20a, 20b, 20c, 20d; 20a', 20b', 20c', 20d' or of the adapter element 40, 40', 40", 40‴, in particular at least one counter bayonet fastening means, such as a projection, protrusion or nose-piece which is inserted into the transverse slot of the bayonet fastening element 16 and then arranged in the closed position by means of a plug-in rotary movement and causes the fixed-connection to be made; cf. figures 10 to 10 and 21 to 28;
24' further counter mounting means of the filter cartridge 20a, 20b, 20c, 20d; 20a', 20b', 20c', 20d', 20d' or of the adapter element 40, 40', 40", 40"', in particular at least one counter form-fit connection element, such as a horizontal recess, for forming a form-fit connection or form-lock connection with a form-fit connection element 16' assigned to the base plate 10
25 locking recess or undercut of the adapter element 40', 40" (cf. figures **11** and 20)
26 closed end cap or upper end plate of the filter cartridge 20a, 20b, 20c, 20d; 20a', 20b', 20c', 20d'
27 handle for axial movement of the filter cartridge 20a", 20b", 20c", 20d"; first embodiment cf. figures 23 and 36
27' handle for axial movement of the filter cartridge 20a, 20b, 20c, 20d; 20a', 20b', 20c', 20d'second embodiment cf. figure 3
28 open end cap or lower end plate or open-end disc of the filter cartridge 20a, 20b, 20c, 20d; 20a', 20b', 20c', 20d' first embodiment (cf. figure 20)
28' open end cap or lower end plate or open-end disc of the filter cartridge 20a, 20b, 20c, 20d; 20a', 20b', 20c', 20d'; second embodiment (cf. figure 21)
29 locking means that prevents the bayonet connection (16, 24) to be accidentally loosened or turned back cf. figure 27
30 radial sealing means for sealing the respective filter cartridge 20a, 20b, 20c, 20d; 20a', 20b', 20c', 20d' with respect to the adapter element 40, 40', 40" or with respect to the base plate 10; first embodiment (cf. figure 20)
30' radial sealing means for sealing the respective filter cartridge 20a, 20b, 20c, 20d; 20a', 20b', 20c', 20d' with respect to the adapter element 40, 40', 40" or with respect to the base plate 10; second embodiment (cf. figure 21)
30" radial sealing means for sealing the respective filter cartridge 20a, 20b, 20c, 20d; 20a', 20b', 20c', 20d'; with respect to the adapter element 40, 40', 40" or with respect to the base plate 10, in particular O-ring or quadring; third embodiment (cf. figures34 and 39)
32 axial sealing means for sealing the respective filter cartridge 20a, 20b, 20c, 20d; 20a', 20b', 20c', 20d' with respect to the base plate 10 (cf. figures 21 and 24)
32' circular or quadrangularaxial sealing means, in particular O-ring or quadring, second embodiment (cf. figure 34)
32" cylindrical or axial sealing means
40 adapter element or adapter piece of the air filter device 100; first embodiment cf. figures 1, 2, 3, 5, 8 and 9
40' adapter element or adapter piece of the air filter device 100'; second embodiment cf. figures 11, 15 and 16
40" adapter element or adapter piece of the air filter device 100"; third embodiment cf. figures 17, 19, 20
40‴ adapter element or adapter piece of the air filter device 100‴; fourth embodiment cf. figures 21, 24, 27 and 28
40"" adapter element or adapter piece of the air filter device 100""; fifth embodiment cf. figures 29 to 32
40‴ʺ adapter element or adapter piece of the air filter device 100‴ʺ; sixth embodiment cf. figures 34 to 38
40‴‴ adapter element or adapter piece of the air filter device 100‴ʺ; seventh embodiment cf. figures 39 to 43
42 screw thread collar of the adapter element 40, 40', 40", 40‴, 40"", 40‴ʺ, 40""", in particular adapter element screw thread collar, said screw thread collar being formed circumferential, in particular axially extending and cylindrical, such as a tubular nozzle segment or tubular socket element, of the adapter element 40, 40', 40", 40"", 40‴ʺ, 40"""
44 flattened or thinner-walled circumferential position of the adapter element 40', 40"
50 filter medium body
52 connection interface of the open end cap 28 comprising the counter mounting means 22
54 rib of the connection interface 52 of the open end cap 28
56 sealing interface of the open end cap 28 designed for being in contact with the radial sealing means 30
100 air filter device, in particular for air filtration in buildings; first embodiment cf. figures 1 to 10
100' air filter device, in particular for air filtration in buildings; second embodiment cf. figures 11 to 16
100" air filter device, in particular for air filtration in buildings; third embodiment cf. figures 20 to 28
100‴ air filter device, in particular for air filtration in buildings; fourth embodiment cf. figures 21 to 28
100"" air filter device, in particular for air filtration in buildings; fifth embodiment cf. figures 9 to 46
100‴ʺ air filter device, in particular for air filtration in buildings; sixth embodiment cf. figures 34 to 38
100‴‴ air filter device, in particular for air filtration in buildings; seventh embodiment cf. figures 39 to 43
200 filter housing for the air filter device 100, 100', 100"
202 supply air fan
204 heater and/or cooler
206 prefilter
210 flow channel of a plant for building air filtration
300 plant building air filtration
400 longitudinal axis of the filter cartridge

## Claims

1. An air filter device (100; 100'; 100"; 100‴; 100""; 100‴ʺ; 100"""), in particular for building air filtration, comprising
- a base plate (10) with a plurality of spaced-apart flow openings (12a, 12b, 12c, 12d) and
- a plurality of, in particular cylindrical, filter cartridges (20a, 20b, 20c, 20d; 20a', 20b', 20c', 20d';), each having a filter medium body (50) comprising at least one gas filter medium,
-- wherein the base plate (10) comprises adjacent to the flow openings (12a, 12b, 12c, 12d) in each case at least one mounting device (14, 16; 16'; 16") for mounting one filter cartridge (20a, 20b, 20c, 20d; 20a', 20b', 20c', 20d') each on the base plate (10),
-- wherein the filter cartridges (20a, 20b, 20c, 20d; 20a', 20b', 20c', 20d') each have at least one counter mounting means (22, 24; 24') corresponding to the mounting device (14, 16; 16'; 16"), which counter mounting means (22) can be brought into operative connection with the respective mounting device (14, 16; 16'; 16") of the base plate (10),
-- wherein the filter cartridges (20a, 20b, 20c, 20d; 20a', 20b', 20c', 20d') are each sealed directly or indirectly with respect to an edge of the base plate (10) surrounding one of the flow openings (12a, 12b, 12c, 12d), and
-- wherein the base plate (10) can be mounted in a filter housing (200) in such a way that it is arranged between an upstream unfiltered air side and a downstream filtered air side,
**characterized in that**
the filter cartridges (20a, 20b, 20c, 20d; 20a', 20b', 20c', 20d') are mounted on an adapter element (40; 40'; 40"; 40‴; 40""; 40‴ʺ; 40""") assigned to the base plate (10) for providing an interface to the filter cartridges (20a, 20b, 20c, 20d; 20a', 20b', 20c', 20d'),
- wherein the adapter element (40; 40'; 40"; 40‴; 40""; 40‴ʺ; 40‴‴) comprises
-- the mounting devices (14) for fastening at least one of filter cartridge (20a, 20b, 20c, 20d; 20a', 20b', 20c', 20d') with the adapter element (40; 40'; 40"; 40‴; 40""; 40‴ʺ; 40""") as well as
-- at least one further counter mounting means (24; 24') for fastening the adapter element (40; 40'; 40"; 40‴; 40""; 40‴ʺ; 40""") with the base plate (10),
- wherein the mounting device (14) or at least one of the mounting devices (14) of the base plate (10) is designed as a screw thread connection means (14),
- wherein the corresponding counter mounting means (22) or at least one of the corresponding counter mounting means (22) of at least one of the filter cartridges (20a, 20b, 20c, 20d; 20a', 20b', 20c', 20d') is designed as a counter screw thread connection means (22), and
- wherein the screw thread connection means (14) and the counter screw thread connection means (22) form together a screw thread connection (14, 22), wherein the screw thread connection (14, 22) can be tightened or loosened by applying rotational movement to the screw thread connection means (14).

2. Air filter device according to claim 1, **characterized in**
- **that** the screw thread connection means (14) is a continuous or interrupted helical groove grooved, in particular cut, into an axially extending cylindrical or conical screw thread collar (42) of the adapter element (40; 40'; 40"; 40‴; 40""; 40‴ʺ; 40"""), and
- **that** the counter screw thread connection means (22) is a continuous or interrupted helical ridge that wraps around the surface of a cylindrical collar of the filter cartridges (20a, 20b, 20c, 20d; 20a', 20b', 20c', 20d') wherein the adapter element screw thread collar (42) is designed to receive and engage with the corresponding cylindrical collar of the filter cartridges (20a, 20b, 20c, 20d; 20a', 20b', 20c', 20d').

3. Air filter device according to claim 2, **characterized in that** the filter cartridges (20a, 20b, 20c, 20d; 20a', 20b', 20c', 20d') each comprise an open end cap (28) at one axial end, wherein the open end cap (28) comprises at least one inlet-opening, which is connected to one of the flow openings (12a, 12b, 12c, 12d) to allow gas to enter into the respective filter cartridge (20a, 20b, 20c, 20d; 20a', 20b', 20c', 20d') assigned to that open end cap (28) and wherein the cylindrical collar of the filter cartridges (20a, 20b, 20c, 20d; 20a', 20b', 20c', 20d') surrounds an outer cylindrical surface of the filter cartridges (20a, 20b, 20c, 20d; 20a', 20b', 20c', 20d') and is part of the open end cap (28).

4. Air filter device according to claim 3, **characterized in that** the filter cartridges (20a, 20b, 20c, 20d; 20a', 20b', 20c', 20d') each comprise a closed end cap (26) at the other axial end, wherein the end caps (26, 28) border the filter medium body (50) terminally, and wherein the closed end cap (26) comprises at least one handle or grip element (27; 27') for applying tensile or compressive force on the filter cartridge (20a, 20b, 20c, 20d; 20a', 20b', 20c', 20d') to facilitate rotational movement of the screw thread connection means (14) and formation or loosening of the screw thread connection.

5. Air filter device according to claim 3, **characterized in that** the further counter mounting means (24; 24') can be brought into operative connection with at least one corresponding further mounting device (16; 16'; 16") of the base plate (10), wherein the further mounting device (16; 16'; 16") is arranged adjacent to the flow openings (12a, 12b, 12c, 12d) of the base plate (10).

6. Air filter device according to at least one of claims 1 to 5, **characterized in that** the further counter mounting means (24; 24') is designed as a counter bayonet fastening means (24) for fastening the adapter element (40; 40‴; 40"") with the base plate (10) by means of a bayonet connection (16, 24).

7. Air filter device according to claim 6, **characterized in that** the adapter element (40, 40‴; 40‴ʺ; 40""") comprises adjacent to the counter bayonet fastening means (24) at least one locking means (29) being designed for cooperating with the bayonet fastening means (16) of the base plate (10) to prevent the bayonet connection (16, 24) to be accidentally loosened or turned back.

8. Air filter device according to at least one of claims 1 to 5, **characterized in that** the further counter mounting means (24; 24') is designed as at least one counter form-fit connection means (24') for fastening the adapter element (40', 40"; 40‴ʺ; 40""") with the base plate (10) by means of a form-fit connection (16', 16", 24') or form-lock connection.

9. Air filter device according to claim 8 **characterized in, that** the counter form-fit connection means (24') of the adapter element (40'; 40"; 40‴ʺ; 40""") is designed as at least one snapping collar being designed to extend through at least one of the flow openings (12a, 12b, 12c, 12d) and being formed at least partly circumferential, preferably circumferential, wherein the snapping collar (24') is fitted with a locking recess (25) that is to interlock with the further mounting device (16'; 16"), in particular with an edge (16'; 16") of the base plate (10) surrounding an opening (11, 12a, 12b, 12c, 12d) of the base plate (10) to form the form-fit connection (16', 16", 24').

10. Air filter device according to at least one of claims 1 to 9, **characterized in, that** the adapter element (40; 40'; 40"; 40‴; 40""; 40‴ʺ; 40""") is axially sealed with respect to the base plate (10), in particular by means of at least one sealing means (32; 32'; 32") or adhesive being axially arranged between the adapter element (40; 40'; 40"; 40‴; 40""; 40‴ʺ; 40""") and the base plate (10).

11. A filter cartridge (20a, 20b, 20c, 20d; 20a', 20b', 20c', 20d') for an air filter device (100; 100'; 100"; 100‴; 100""; 100‴ʺ; 100""") according to at least one of the preceding claims, wherein the filter cartridge (20a, 20b, 20c, 20d; 20a', 20b', 20c', 20d') comprises
- a filter medium body (50) comprising at least one gas filter medium,
- a closed end cap (26) at one axial end of the filter medium body (50) and an open end cap (28) at the other axial end of the filter medium body (50), wherein the open end cap (28) comprises at least one inlet-opening (27) for the inflow of gas to be filtered into the filter cartridge (20a, 20b, 20c, 20d; 20a', 20b', 20c', 20d'), wherein the closed end cap (26) and the open end cap (28) border the filter medium body (50) terminally, and
- at least one counter screw thread connection means (22), which can be brought into operative connection with at least one corresponding screw thread connection means (14) of the adapter element (40, 40', 40", 40‴; 40""; 40‴ʺ; 40""") of the air filter device (100; 100'; 100"; 100‴; 100""; 100‴ʺ; 100‴‴).

12. Air filter cartridge according claim 11, **characterized in that** the counter screw thread connection means (22) is arranged at a connection interface (52) of the open end cap (28), wherein the connection interface (52) has a smaller diameter as the filter medium body (50) of the filter cartridges (20a, 20b, 20c, 20d; 20a', 20b', 20c', 20d').

13. An adapter element (40; 40'; 40"; 40‴; 40""; 40‴ʺ; 40""") for an air filter device (100; 100'; 100"; 100‴; 100""; 100‴ʺ; 100""") according to at least one of the claims 1 to 10, **characterized in that** the adapter element (40; 40'; 40"; 40‴; 40""; 40‴ʺ; 40""") allows a connection of a filter cartridge (20a, 20b, 20c, 20d; 20a', 20b', 20c', 20d') with the base plate (10) of the air filter device (100; 100'; 100"; 100‴; 100""; 100‴ʺ; 100"""), wherein for mounting the filter cartridge (20a, 20b, 20c, 20d; 20a', 20b', 20c', 20d') on the base plate (10) the adapter element (40; 40'; 40"; 40‴; 40""; 40‴ʺ; 40""") comprises
- at least one mounting device (14) being designed as a screw thread connection means (14) for forming a screw thread connection (14, 22) together with a corresponding counter mounting means (22) of at least one of the filter cartridges (20a, 20b, 20c, 20d; 20a', 20b', 20c', 20d'), and
- at least one further counter mounting means (24; 24'), in particular at least one counter bayonet fastening means (24) or at least one counter form-fit connection means (24'), for fastening the adapter element (40; 40'; 40"; 40‴; 40""; 40‴ʺ; 40""") with the base plate (10).

14. Method for exchanging a filter cartridge (20a, 20b, 20c, 20d; 20a', 20b', 20c', 20d') of an air filter device (100; 100'; 100"; 100‴; 100""; 100‴ʺ; 100‴‴) according to at least one of the claims 1 to 10, wherein
- a first filter cartridge (20a, 20b, 20c, 20d; 20a', 20b', 20c', 20d') is disassembled from the base plate (10) by loosening a screw thread connection formed between a screw thread connection means (14) of a base plate (10) and a counter screw thread connection means (22) of the filter cartridge (20a, 20b, 20c, 20d; 20a', 20b', 20c', 20d') by means of a radial movement of the filter cartridge and
- a second filter cartridge (20a, 20b, 20c, 20d; 20a', 20b', 20c', 20d') is mounted on the base plate (10) by bringing the counter screw thread connection means (22) of the filter cartridge (20a, 20b, 20c, 20d; 20a', 20b', 20c', 20d') into operative connection with the screw thread connection means (14) of the base plate (10) by means of a radial movement of the filter cartridge.

15. Use of a filter cartridge (20a, 20b, 20c, 20d; 20a', 20b', 20c', 20d') according to claim 11 or 12 in an air filter device (100; 100'; 100"; 100‴; 100""; 100‴ʺ; 100""") according to at least one of claims 1 to 10, or use of an adapter element (40; 40'; 40"; 40‴; 40""; 40‴ʺ; 40""") of claim 13 for retrofitting an air filter device (100; 100'; 100"; 100‴; 100ʺʺ; 100‴ʺ; 100""") according to the preamble of claim 1 into an air filter device (100; 100'; 100"; 100‴; 100""; 100‴ʺ; 100""") according to at least one of claims 1 to 10.
